# EUROPÄISCHE PATENTSCHRIFT

(11) **EP 1 812 258 B1**
(45) Veröffentlichungstag und Bekanntmachung des Hinweises auf die Patenterteilung: **30.03.2011**
(21) Anmeldenummer: 05807859.3
(22) Anmeldetag: 19.10.2005
(51) Int. Cl.: B60K 31/04, B60K 31/18, B60K 28/02

(54) **FAHRASSISTENZSYSTEM MIT SICHERHEITSFUNKTION**
DRIVER ASSISTANCE SYSTEM COMPRISING A SAFETY FUNCTION
SYSTEME D'ASSISTANCE A LA CONDUITE COMPRENANT UNE FONCTION SECURITE

(30) Priorität: 11.11.2004 DE 102004054472
(43) Veröffentlichungstag der Anmeldung: 01.08.2007
(73) Patentinhaber: Bayerische Motoren Werke Aktiengesellschaft, 80809 München (DE)
(72) Erfinder: FUNK, Killian, 80636 München (DE); KOPF, Matthias, 81245 München (DE)
(86) Internationale Anmeldenummer: PCT/EP2005/011245
(87) Internationale Veröffentlichungsnummer: WO 2006/053618

(56) Entgegenhaltungen:
- WO-A-03/070093
- DE-A1- 10 024 227
- DE-A1- 10 039 795
- DE-A1- 10 218 698
- US-A1- 2005 030 184

## Beschreibung

Die Erfindung bezieht sich auf ein Fahrerassistenzsystem für Kraftfahrzeuge nach dem Oberbegriff des Patentanspruchs 1.

Derzeit existieren eine Reihe von Fahrerassistenzsystemen, die den Fahrer beim Fahren unterstützen sollen. Ein typisches Beispiel für ein Fahrerassistenzsystem ist ein sogenanntes ACC-System (Adaptive Cruise Control). Bei einem solchen Fahrerassistenzsystem wird die Geschwindigkeit des Fahrzeugs automatisch auf eine vom Fahrer vorgebbare Wunschgeschwindigkeit geregelt. Weiter umfasst ein derartiges Fahrerassistenzsystem Abstandssensoren, mit dem vorausfahrende Fahrzeuge ermittelt bzw. der Abstand zu vorausfahrenden Fahrzeugen bestimmt werden kann. Droht der Abstand zum vorausfahrendem Fahrzeug zu gering zu werden, wird die Geschwindigkeit des Fahrzeugs derart reduziert, dass ein sicherer Abstand zum vorausfahrendem Fahrzeug gehalten wird. Ein ACC-System wird in der Regel durch einen Schalter oder einen Hebel aktiviert. Zum Deaktivieren muss entweder der Schalter oder Hebel erneut, oder die Fahrzeugbremse betätigt werden.

Des Weiteren sind Fahrerassistenzsysteme bekannt, die den Fahrer bei einer kritischen Verkehrsituation warnen oder das Fahrzeug bei einer möglichen Kollision mit einem Objekt automatisch abbremsen oder sogar eine autarke Notbremsung einleiten.

Ein Fahrerassistenzsystem gemäß dem Oberbegriff ist bereits aus der DE 102 18 698 A1 bekannt. Hierbei können die einzelnen Teilfunktionen des Fahrerassistenzsystems mit einem Bedienelement durch mehrmaliges Drücken oder Drehen des Bedienelements einzeln aktiviert oder deaktiviert werden. Nachteilig ist hierbei, dass gerade in kritischen Verkehrsituationen, wie bspw. bei einem Spurwechsel oder einem Überholvorgang, in denen der Fahrer auf bestimmte Funktionen des Fahrerassistenzsystems angewiesen ist, der Fahrer durch das mehrmalige Drehen oder Drücken des Bedienelements, um zu dem gewünschten Betriebsmodus zu gelangen, vom Verkehrsgeschehen abgelenkt wird.

Aufgabe der Erfindung ist, ein verbessertes Fahrerassistenzsystem anzugeben, bei dem der Fahrer vor allem in kritischen Verkehrsituationen nicht durch die Aktivierung oder Deaktivierung bestimmter Teilfunktionen des Fahrerassistenzsystems abgelenkt wird.

Diese Aufgabe wird erfindungsgemäß durch ein Fahrerassistenzsystem nach Patentanspruch 1 gelöst. Vorteilhafte Weiterbildungen sind die Gegenstände der abhängigen Ansprüche.

Das erfindungsgemäße Fahrerassistenzsystem für Kraftfahrzeuge, mit mindestens zwei Betriebsmodi, wobei in jedem Betriebsmodus unterschiedliche Teilfunktionen des Fahrerassistenzsystems aktiviert sind und mit mindestens einem Bedienelement zum Aktivieren mindestens eines Betriebsmodus des Fahrerassistenzsystems, zeichnet sich dadurch aus, dass für die Dauer der Betätigung des Bedienelements der durch das Bedienelement aktivierte Betriebsmodus aktiv ist.

Dieses erfindungsgemäße Fahrerassistenzsystem bietet den Vorteil, dass der Fahrer durch die schnelle und einfache Weise des Aktivierens eines bestimmten Betriebsmodus, der vorteilhafterweise für kritische Verkehrssituationen ausgelegt ist, nicht unnötig vom Verkehrsgeschehen abgelenkt wird. Bei dem Bedienelement kann es sich vorteilhafterweise um eine am Lenkrad angebrachte Taste handeln. Somit kann der Fahrer bei Betätigung der Taste beide Hände am Lenkrad lassen und sich auf das Verkehrsgeschehen konzentrieren. Bei dem Bedienelement kann es sich um ein separates, speziell zum Aktivieren des durch Dauerbetätigung aktiven Betriebsmodus, den sogenannten Sicherheitsbetriebsmodus, handeln, oder um ein Bedienelement, mit dem sowohl herkömmliche Betriebsmodi des Fahrerassistenzsystems, wie auch der Sicherheitsmodus aktiviert werden können.

Vorteilhafterweise ist für die Dauer der Betätigung des Bedienelements ausschließlich der durch das Bedienelement aktivierte Betriebsmodus aktiviert. Somit werden diejenigen Betriebsmodi, die zuvor aktiv geschaltet waren, für die Dauer der Betätigung des Bedienelements deaktiviert. Sobald der Fahrer das Bedienelement wieder loslässt, werden diese Betriebsmodi des Fahrerassistenzsystems wieder aktiviert.

Vorteilhafterweise umfasst das Fahrerassistenzsystem eine Warnfunktion und/oder eine Eingriffsfunktion und der für die Dauer der Betätigung aktivierte Betriebsmodus ist derart ausgestaltet, dass für die Dauer der Betätigung des Bedienelements die Warnfunktion und/oder Eingriffsfunktion mit einer längeren Vorwarnzeit und/oder mit einem früheren Eingriffszeitpunkt aktiviert ist.

Handelt es sich bei dem Fahrerassistenzsystem beispielsweise um ein Sicherheitssystem, bei dem der vorausfahrende Verkehr durch geeignete Sensoren überwacht wird und beim Detektieren einer kritischen Verkehrssituation der Fahrer gewarnt wird, kann der bei Dauerbetätigung des Bedienelements aktive Betriebsmodus derart ausgestaltet sein, dass das Sicherheitssystem so umparametrisiert wird, dass der Fahrer im Vergleich zum normalen Betrieb des Sicherheitssystems bereits früher auf eine kritische Verkehrssituation hingewiesen wird.

Vorteilhafterweise kann das Fahrerassistenzsystem zumindest eine Abstandskontrollfunktion umfassen und der für die Dauer der Betätigung aktivierte Betriebsmodus derart ausgestaltet sein, dass für die Dauer der Betätigung des Bedienelements ausschließlich die Abstandskontrollfunktion aktiviert ist.

Bei einem Fahrerassistenzsystem mit einer Abstandskontrollfunktion kann es sich beispielsweise um ein sogenanntes ACC-System handeln, welches eine Geschwindigkeitsregelfunktion und eine Abstandskontrollfunktion umfasst. Der bei der Dauerbetätigung aktive Betriebsmodus ist derart ausgelegt, dass lediglich die Abstandskontrollfunktion, nicht aber die Geschwindigkeitsregelfunktion aktiv ist. Die Geschwindigkeit des Fahrzeugs wird weiterhin über die Stellung des Gaspedals vorgegeben.

Falls es sich bei der Abstandskontrollfunktion um eine Warnfunktion handelt, gibt diese vorteilhafterweise bei Unterschreiten eines vorgegebenen Abstands zum vorausfahrenden Fahrzeug ein akustisches, optisches oder haptisches Signal aus. Bei dem haptischen Signal kann es sich beispielsweise um ein Vibrieren zumindest eines Teils des Lenkrads handeln. Falls das Fahrzeug mit einem aktiven Gaspedal ausgestattet ist, könnte bei Unterschreitung des Abstands auch eine Gegenkraft auf das Gaspedal erzeugt werden.

Falls es sich jedoch bei der Abstandskontrollfunktion um eine Abstandsregelungsfunktion handelt, regelt diese das Fahrzeug auf einen vorgegebenen Abstand zum vorausfahrenden Fahrzeug.

Der vorgegebene Abstand soll in diesem Betriebsmodus nicht durch den Fahrer eingestellt werden. Vielmehr entspricht er vorteilhafterweise dem zum Zeitpunkt der Aktivierung des Sicherheitsmodus vorliegenden Abstand des Fahrzeugs zum vorausfahrendem Fahrzeug. Somit wird der Fahrer nicht unnötig abgelenkt, wenn er diesen Betriebsmodus aktiviert.

Vorteilhafterweise ist in diesem Sicherheitsbetriebsmodus des Fahrerassistenzsystems, der nur bei Dauerbetätigung des Bedienelements aktiv ist, kein Unterschreiten des automatisch eingeregelten Abstands durch einen Eingriff des Fahrers, beispielsweise durch Betätigung des Gaspedals möglich. Somit wird sichergestellt, dass eine Kollision vermieden wird, selbst wenn der Fahrer in einer angespannten Situation versehentlich das Gaspedal weiter durchdrückt.

Vorteilhafterweise kann der für die Dauer der Betätigung des Bedienelements aktivierte Betriebsmodus auch derart ausgestaltet sein, dass für die Dauer der Betätigung des Bedienelements ein weiteres Fahrerassistenzsystem aktiviert ist.

Handelt es sich bei dem Fahrerassistenzsystem um ein System, das bei Dauerbetätigung des Bedienelements eine Abstandkontrollfunktion aktiviert, kann zusätzlich zum Beispiel für die Dauer der Betätigung ein Spurhalteunterstützungssystem und/oder eine Spurverlassenswarnung aktiv sein.

Im Folgenden wird die Erfindung anhand einer Zeichnung näher erläutert.
Dabei zeigt die
- Fig. 1: einen vereinfachten Aufbau eines erfindungsgemäßen Fahrerassistenzsystems und
- Fig. 2: einen vereinfachten Zustandsautomaten für einen bei Dauerbetätigung aktiven Betriebsmodus eines sogenannten ACC-Systems.

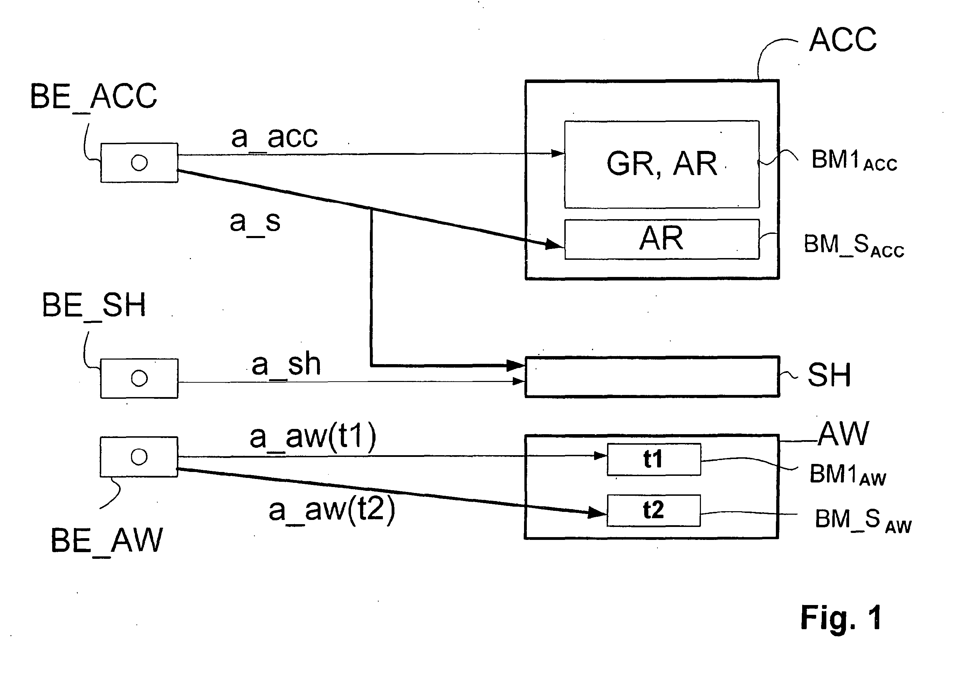

Die Fig. 1 zeigt drei Fahrerassistenzsysteme ACC, SH und AW, die bei Betätigung des jeweiligen Bedienelements BE_ACC, BE_SH und BE_AW in einem Betriebsmodus aktiviert werden. Bei dem Fahrerassistenzsystem ACC handelt es sich um ein sog. ACC-Fahrerassistenzsystem, welches im normalen Betrieb eine Geschwindigkeitsregelung GR in Verbindung mit einer Abstandsregelung AR vornimmt. Bei dem Fahrerassistenzsystem SH handelt es sich um bereits bekanntes Spurhalte-Fahrerassistenzsystem. Bei dem Fahrerassistenzsystem AW handelt es sich um ein Auffahrwarn-Fahrerassistenzsystem.

Das ACC-Fahrerassistenzsystem ACC, kann in den beiden Betriebsmodi BM1_{ACC} und BM_S_{ACC} betrieben werden kann. Im Betriebsmodus BM1_{ACC} sind die Teilfunktionen Geschwindigkeitsregelung GR und Abstandsregelung AR aktiviert, wobei im Sicherheits-Betriebsmodus BM_S_{ACC} lediglich die Teilfunktion Abstandsregelung AR aktiviert ist. Das ACC-Fahrerassistenzsystem ist mit dem Bedienelement BE_ACC verbunden, bei dessen Einfachbetätigung ein Signal a_äcc zum Aktivieren des Betriebsmodus BM1 an das ACC-Fahrerassistenzsystem ACC gesendet wird.

Anstelle einer Einfachbetätigung des Bedienelements BE_ACC zum Erreichen des herkömmlichen Betriebsmodus BM1_{ACC} des ACC-Fahrerassistenzsystems kann durch eine Dauerbetätigung des Bedienelements BE_ACC mittels des Signals a_s der Sicherheits-Betriebsmodus BM_S_{ACC} des ACC-Fahrerassistenzsystems aktiviert werden. Gleichzeitig wird durch die Dauerbetätigung des Bedienelements BE_ACC zusätzlich das Spurhalte-Fahrerassistenzsystem SH aktiviert um den Fahrer zusätzlich zu unterstützen.

Das Auffahrwarn- Fahrerassistenzsystem AW kann in den beiden Betriebsmodi BM1_{AW} und BM_S_{AW} betrieben werden. Beide Betriebsmodi können durch das gleiche Bedienelement BE_AW aktiviert werden. Es wäre aber auch möglich die beiden Betriebsmodi BM1_{AW} und BM_S_{AW} mit verschiedenen Bedienelementen zu aktivieren. Bei einer Einfachbetätigung des dazugehörigen Bedienelements BE_AW wird durch das Signal a_aw(t1) den Betriebsmodus BM1_{AW} aktiviert. Dieser herkömmliche Betriebsmodus BM1_{AW} ist derart ausgestaltet, dass bei Vorliegen einer kritischen Situation mit einer Vorwarnzeit t1 ein akustisches optisches oder haptisches Signal an den Fahrer ausgegeben wird.

Anstelle einer Einfachbetätigung des Bedienelements BE_AW zum Aktivieren des Betriebsmodus BM1_{AW} des Auffahrwarn-Fahrerassistenzsystems AW wird bei Dauerbetätigung des Bedienelements BE_AW durch das Signal a_aw(t2) der Sicherheitsbetriebsmodus BM_S_{AW} des Auffahrwarn-Fahrerassistenzsystems AW aktiviert. Dieser Sicherheitsbetriebsmodus BM_S_{AW} ist derart ausgestaltet, dass die Vorwarnzeit t2, bei der ein Signal an den Fahrer aufgrund einer kritischen Verkehrssituation ausgegeben wird, vergrößert wird, wodurch das Auffahrwarn-Fahrerassistenzsystem AW bereits früher auf kritische Verkehrsituationen reagiert.

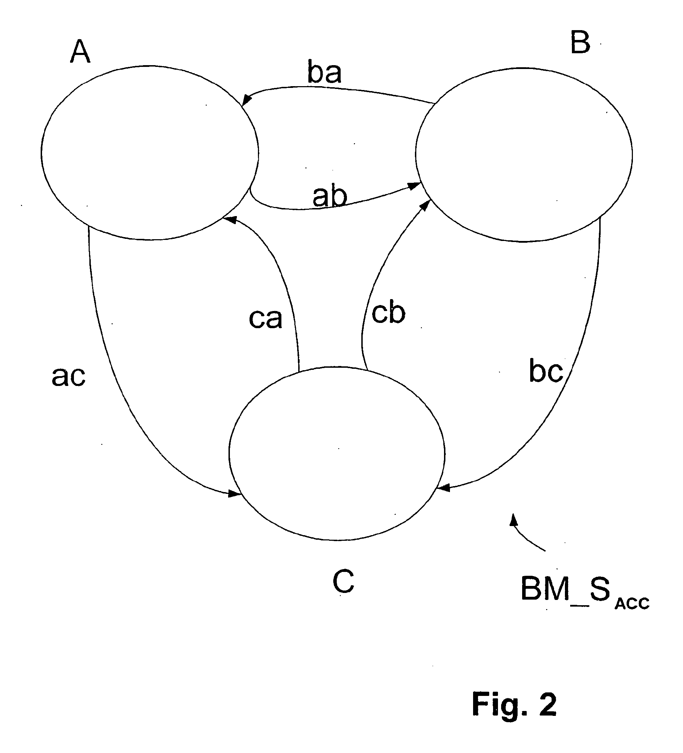

In der Fig. 2 ist der vereinfachte Zustandsautomat für das ACC-Fahrersicherheitssystem ACC im Sicherheits-Betriebsmodus dargestellt. Im ausgeschalteten Zustand C erfolgt kein Eingriff des ACC-Fahrerassistenzsystems. Für die Dauer der Betätigung des Bedienelements bei einer "Freifahrt", wenn kein vorausfahrendes Fahrzeug erkannt wird, wird über den Pfad ca in den Zustand A übergegangen. In diesem Zustand A wird der Geschwindigkeitswunsch weiter implizit durch den Fahrer durch die Gaspedalstellung vorgegeben. Wird jedoch für die Dauer der Betätigung des Bedienelements eine "Folgefahrt" detektiert, wird bei gerade aktiviertem Sicherheits-Betriesmodus über den Pfad cb, oder bei bereits aktiviertem Sicherheitsmodus und einer zuvor detektierten "Freifahrt" über den Pfad ab der Zustand B erreicht. In diesem Zustand B wird entweder der Abstand des Fahrzeugs zum vorausfahrendem Fahrzeug bei Aktivierung des SicherheitsModus oder ein im Sicherheits-Betriebsmodus fest eingestellter Abstand zum vorausfahrendem Fahrzeug gehalten. Wesentlich bei diesem Sicherheits-Betriebsmodus ist, dass im Zustand B der Abstand auch bei einer stärkeren Betätigung des Gaspedals durch den Fahrer nicht unterschritten werden kann. Wird im Zustand B beispielsweise aufgrund eines Überholvorgangs oder aufgrund eines Abbiegevorgangs kein vorrausfahrendes Fahrzeug mehr detektiert, wird vom Zustand B über den Pfad ba in den Zustand A übergegangen.

Wird der Sicherheits-Betriebsmodus durch Loslassen des Bedienelements wieder deaktiviert, wird bei einer zuvor detektierten "Freifahrt" vom Zustand A über den Pfad ac in den Zustand C, und bei einem zuvor detektierten vorausfahrendem Fahrzeug vom Zustand B über den Pfad bc in den Zustand C übergegangen.

## Patentansprüche

1. Fahrerassistenzsystem für Kraftfahrzeuge, mit zwei Betriebsmodi, wobei in jedem Betriebsmodus unterschiedliche Teilfunktionen des Fahrerassistenzsystems aktiviert sind und mit einem Bedienelement zum Aktivieren eines Betriebsmodus des Fahrerassistenzsystems, **dadurch gekennzeichnet, dass** für die Dauer der Betätigung des Bedienelements (BE_ACC, BE_AW) ein durch das Bedienelement (BE_ACC, BE_AW) aktivierter Sicherheits-Betriebsmodus (BM_S_{ACC}, BM_S_{AW}) aktiviert ist.

2. Fahrerassistenzsystem nach Patentanspruch 1, **dadurch gekennzeichnet, dass** das Bedienelement (BE_ACC, BE_AW) eine am Lenkrad angebrachte Taste ist.

3. Fahrerassistenzsystem.nach Patentanspruch 1 oder 2, **dadurch gekennzeichnet, dass** für die Dauer der Betätigung des Bedienelements (BE_ACC, BE_AW) ausschließlich der durch das Bedienelement aktivierte Betriebsmodus (BM_S_{ACC}, BM_S_{AW}) aktiviert ist.

4. Fahrerassistenzsystem nach Patentanspruch 1, 2 oder 3, **dadurch gekennzeichnet, dass** das Fahrerassistenzsystem (ACC, AW) eine Warnfunktion und/oder eine Eingriffsfunktion (GR, AR) umfasst und der für die Dauer der Betätigung des Bedienelements aktivierte Sicherheits-Betriebsmodus(BM_S_{ACC}, BM_S_{AW}) derart ausgestaltet ist, dass für die Dauer der Betätigung des Bedienelements (BE_ACC, BE_AW) die Warnfunktion und/oder die Eingriffsfunktion (AR) aktiviert ist oder die Warnfunktion und/oder Eingriffsfunktion (AR) mit einer längeren Vorwarnzeit (t2) und/oder einem früheren Eingriffszeitpunkt aktiviert ist.

5. Fahrerassistenzsystem nach einem der vorangegangenen Patentansprüche, **dadurch gekennzeichnet, dass** das Fahrerassistenzsystem zumindest eine Abstandskontrollfunktion (AR) umfasst und der für die Dauer der Betätigung des Bedienelements (BE_ACC) aktivierte Sicherheits-Betriebsmodus (BM_S_{ACC}) derart ausgestaltet ist, dass für die Dauer der Betätigung des Bedienelements (BE_ACC) ausschließlich die Abstandskontrollfunktion (AR) aktiviert ist.

6. Fahrerassistenzsystem nach Patentanspruch 5, **dadurch gekennzeichnet, dass** die Abstandskontrollfunktion (AR) eine Warnfunktion ist, die bei Unterschreiten eines vorgegebenen Abstands zum vorausfahrenden Fahrzeug ein akustisches, optisches oder haptisches Signal ausgibt.

7. Fahrerassistenzsystem nach Patentanspruch 5, **dadurch gekennzeichnet, dass** die Abstandskontrollfunktion (AR) eine Abstandsregelungsfunktion (AR) ist, die das Fahrzeug auf einen vorgegebenen Abstand zum vorausfahrenden Fahrzeug regelt.

8. Fahrerassistenzsystem nach Patentanspruch 7, **dadurch gekennzeichnet, dass** der vorgegebene Abstand nicht unterschritten werden kann.

9. Fahrerassistenzsystem nach einem der Patentansprüche 5 bis 8, **dadurch gekennzeichnet, dass** der vorgegebene Abstand dem zum Zeitpunkt der Aktivierung des Sicherheits-Betriebsmodus vorliegenden Abstand des Fahrzeugs zum vorausfahrendem Fahrzeug entspricht.

10. Fahrerassistenzsystem nach einem der vorangegangenen Patentansprüche, **dadurch gekennzeichnet, dass** der für die Dauer der Betätigung aktivierte Betriebsmodus derart ausgestaltet ist, dass für die Dauer der Betätigung des Bedienelements (BE_ACC) ein weiteres Fahrerassistenzsystem (SH) aktiviert ist.

## Claims

1. A driver assistance system for motor vehicles, with two operating modes, wherein different partial functions of the driver assistance system are activated in each operating mode and with an operating element to activate an operating mode of the driver assistance system, **characterised in that** a safety operating mode (BM_S_{ACC}, BM_S_{AW}) activated by the operating element (BE_ACC, BE_AW) is activated for the duration of the activation of the operating element (BE_ACC, BE_AW).

2. A driver assistance system according to claim 1, **characterised in that** the operating element (BE_ACC, BE_AW) is a key mounted on the steering wheel.

3. A driver assistance system according to claim 1 or 2, **characterised in that** exclusively the operating mode (BM_S_{ACC}, BM_S_{AW}) activated by the operating element is activated for the duration of the actuation of the operating element (BE_ACC, BE_AW).

4. A driver assistance system according to claim 1, 2 or 3, **characterised in that** the driver assistance system (ACC, AW) comprises a warning function and/or an intervention function (GR, AR) and the safety operating mode (BM_S_{ACC}, BM_S_{AW}) activated for the duration of the actuation of the operating element is configured in such a way that the warning function and/or the intervention function (AR) is activated for the duration of the actuation of the operating element (BE_ACC, BE_AW) or the warning function and/or intervention function (AR) is activated with a longer pre-warning time (T2) and/or with an earlier intervention instant.

5. A driver assistance system according to any one of the preceding claims, **characterised in that** the driver assistance system comprises at least one distance control function (AR) and the safety operating mode (BM_S_{ACC}) activated for the duration of the actuation of the operating element (BE_ACC) is configured in such a way that exclusively the distance control function (AR) is activated for the duration of the actuation of the operating element (BE_ACC).

6. A driver assistance system according to claim 5, **characterised in that** the distance control function (AR) is a warning function, which emits an acoustic, optical or haptic signal when a predetermined distance from the vehicle travelling ahead is fallen below.

7. A driver assistance system according to claim 5, **characterised in that** the distance control function (AR) is a distance control function (AR), which adjusts the vehicle to a predetermined distance from the vehicle travelling ahead.

8. A driver assistance system according to claim 7, **characterised in that** the predetermined distance cannot be fallen below.

9. A driver assistance system according to any one of claims 5 to 8, **characterised in that** the predetermined distance corresponds to the distance, which is present at the time of the activation of the safety operating mode, of the vehicle from the vehicle travelling ahead.

10. A driver assistance system according to any one of the preceding claims, **characterised in that** the operating mode activated for the duration of the actuation is configured such that a further driver assistance system (SH) is activated for the duration of actuation of the operating element (BE_ACC).

## Revendications

1. Système d'assistance à la conduite de véhicules automobiles à deux modes de fonctionnement et dans chaque mode de fonctionnement, les fonctions partielles différentes du système d'assistance à la conduite, sont activées, le système comportant un élément d'actionnement pour activer un mode de fonctionnement du système d'assistance à la conduite,
système **caractérisé en ce que**
pour la durée d'actionnement de l'élément d'actionnement (BE_ACC, BE_AW), un mode de fonctionnement de sécurité (BM_S_{ACC}, BM_S_{AW}) est activé par l'élément d'actionnement (BE_ACC, BE_AW).

2. Système d'assistance à la conduite selon la revendication 1,
**caractérisé en ce que**
l'élément d'actionnement (BE_ACC, BE_AW) est une touche équipant le volant de direction.

3. Système d'assistance à la conduite selon la revendication 1 ou 2,
**caractérisé en ce que**
pour la durée d'actionnement de l'élément d'actionnement (BE_ACC, BE_AW), exclusivement, le mode de fonctionnement (BM_S_{ACC}, BM_S_{AW}), activé par l'élément d'actionnement sera mis en oeuvre.

4. Système d'assistance à la conduite selon l'une des revendications 1, 2 ou 3,
**caractérisé en ce que**
le système d'assistance à la conduite (ACC, AW) a une fonction d'avertissement et/ou une fonction d'intervention (GR, AR), et le mode de fonctionnement de sécurité (BM_S_{ACC}, BM_S_{AW}), activé pour la durée d'actionnement de l'élément d'actionnement, est conçu pour que pour la durée d'actionnement de l'élément d'actionnement (BE_ACC, BE_AW), la fonction d'avertissement et/ou la fonction d'intervention (AR) soient activées ou que la fonction d'avertissement et/ou la fonction d'intervention (AR) soient activées avec une durée de pré-avertissement (t2) plus longue et/ou un point d'intervention plus précoce.

5. Système d'assistance à la conduite selon l'une des revendications précédentes,
**caractérisé en ce que**
le système d'assistance à la conduite comporte au moins une fonction de contrôle de distance (AR) et le mode de fonctionnement de sécurité (BM_S_{ACC}), activé pour la durée d'actionnement de l'élément d'actionnement (BE_ACC) est conçu pour que la fonction de contrôle de distance (AR) soit activée exclusivement pendant la durée d'actionnement de l'élément d'actionnement (BE_ACC).

6. Système d'assistance à la conduite selon la revendication 5,
**caractérisé en ce que**
la fonction de contrôle de distance (AR), est une fonction d'avertissement qui en cas de dépassement vers le bas d'une distance prédéterminée par rapport au véhicule qui précède, génère un signal acoustique, optique ou haptique.

7. Système d'assistance à la conduite selon la revendication 5,
**caractérisé en ce que**
la fonction de contrôle de distance (AR), est une fonction de régulation de distance (AR) qui régule le véhicule sur une distance prédéfinie par rapport au véhicule qui précède.

8. Système d'assistance à la conduite selon la revendication 7,
**caractérisé en ce que**
la distance prédéfinie ne doit pas être dépassée vers le bas.

9. Système d'assistance à la conduite selon l'une des revendications 5 à 8,
**caractérisé en ce que**
la distance prédéfinie correspond à l'instant de l'activation du mode de fonctionnement de sécurité à la distance qui existe alors entre le véhicule et le véhicule qui précède.

10. Système d'assistance à la conduite selon l'une des revendications précédentes,
**caractérisé en ce que**
le mode de fonctionnement activé pendant la durée d'actionnement, est conçu pour qu'un autre système d'assistance de conduite (SH) soit mis en oeuvre pendant la durée d'actionnement de l'élément d'actionnement (BE_ACC).
